# EUROPÄISCHE PATENTSCHRIFT

(11) **EP 2 789 458 B1**
(45) Veröffentlichungstag und Bekanntmachung des Hinweises auf die Patenterteilung: **20.04.2016**
(21) Anmeldenummer: 14153924.7
(22) Anmeldetag: 05.02.2014
(51) Int. Cl.: B29D 30/20, B29D 30/26, B29D 30/72, B29D 30/30

(54) **Verfahren und Anlage zur Herstellung einer Karkasse für einen Fahrzeugluftreifen**
Method and a system for producing a carcase for a pneumatic tyre
Procédé et installation de fabrication d'une carcasse de pneu de véhicule

(30) Priorität: 11.04.2013 DE 102013103628
(43) Veröffentlichungstag der Anmeldung: 15.10.2014
(73) Patentinhaber: Continental Reifen Deutschland GmbH, 30165 Hannover (DE)
(72) Erfinder: Linne, Stefan, 30900 Wedemark (DE); Reitmann, Sebastian, 31515 Wunstorf (DE); Thomfohrde, Claudia, 38542 Leiferde (DE); Kneussel, Ewald, 30890 Barsinghausen (DE); Möller, Christian, 31552 Rodenberg (DE)
(74) Vertreter: Widjaja, Wira

(56) Entgegenhaltungen:
- EP-A1- 0 555 813
- EP-A2- 0 873 852
- EP-A2- 1 295 706
- WO-A1-2007/054984
- WO-A1-2011/145926
- WO-A1-2012/156147

## Beschreibung

Die Erfindung betrifft ein Verfahren zur Herstellung einer Karkasse für einen Fahrzeugluftreifen, welche mit einem Gürtelverband und einem Laufstreifen zum fertigen Rohreifen komplettiert wird, wobei das Verfahren folgende Schritte aufweist:
- Aufbau einer seitenwandfreien Karkasse mit einer Innenschicht, einer ein- oder mehrlagigen Karkasseinlage, Wulstkernen, insbesondere mit Kernprofilen, an einer Karkassstation auf einer Karkass-Bautrommel und unter Erstellung der Lagenumschläge,
- Aufbringen der Seitenwände auf die Karkasse,
- Überführen der mit den Seitenwänden versehenen Karkasse zu einer Bombiermaschine und Bombieren der Karkasse in eine torusförmige Gestalt.

Die Erfindung betrifft ferner eine Anlage zur Herstellung einer Karkasse für einen Fahrzeugluftreifen, welche mit einem Gürtelverband und einem Laufstreifen zum fertigen Rohreifen komplettiert wird, mit einer Karkassstation mit einer Karkassmaschine und einer Karkass-Bautrommel, einer Vorrichtung zum separaten Aufbringen der Seitenwände, einer Bombierstation und zumindest einer entlang eines insbesondere linearen Transferpfades verfahrbaren Transfereinrichtung für die Karkasse.

Aus der europäischen Patentanmeldeschrift EP 0 555 813 A1 ist bekannt, dass der Aufbau der Karkasse, der Lagenumschlag und das Aufbringen der Seitenwände mittels einer einzigen Aufbautrommel realisiert werden kann.

Weiterhin ist bekannt, auf einer zylindrischen Bautrommel eine seitenwandfreie Karkasse zu erstellen, wobei zumindest eine Karkasseinlage gewickelt und gespleißt wird, anschließend ringförmige Verstärkungsaufbauten mit Wulstkernen gesetzt und die Lagenumschläge erstellt werden. Das bekannte Verfahren erfordert zum Aufbringen der Seitenwände ein Positionieren der Karkasse auf einer weiteren Aufbautrommel und den Einsatz entsprechender Transfereinrichtungen. Dies erlaubt keinen rationellen Ablauf des Aufbauverfahrens.

Der Erfindung liegt die Aufgabe zugrunde, ein Verfahren und eine Anlage der eingangs genannten Art zur Verfügung zu stellen, mit welchen der Reifenkarkassaufbau wesentlich rationeller erfolgen kann, insbesondere soll es auch möglich sein, Reifen verschiedener Konstruktionen fertigen zu können, beispielsweise Reifen mit unterschiedlichen Karkasslagenumschlaglängen, Karkasslagenausführungen und Karkasslagenkombinationen.

Was das Verfahren betrifft wird die gestellte Aufgabe erfindungsgemäß dadurch gelöst, dass die seitenwandfrei erstellte Karkasse an eine erste Transfereinrichtung übergeben wird, welche die Karkasse zu einer Seitenwandstation verfährt, an welcher zwei Seitenwandtrommeln seitlich an die Reifenkarkasse herangefahren und mit dieser verklemmt werden, wobei anschließend die Transfereinrichtung von der Karkasse gelöst und zur Karkassstation rückgefahren wird, wobei die Seitenwände auf die Seitenwandtrommeln gewickelt und seitlich an die Reifenkarkasse angerollt werden, und wobei anschließend eine zweite Transfereinrichtung die Reifenkarkasse von den Seitenwandtrommeln übernimmt und zur Bombierstation verfährt.

Die zugehörige Anlage ist erfindungsgemäß dadurch gekennzeichnet, dass die Vorrichtung zum separaten Aufbringen der Seitenwände eine zwischen der Karkassstation und der Bombierstation positionierte Seitenwandstation mit einem Seitenwandservicer und zwei Seitenwandtrommeln ist, wobei letztere an einer Halterung parallel zum Transferpfad verfahrbar sind, wobei die Seitenwandtrommeln mitsamt der Halterung entlang eines Gestells in den und aus dem Transferpfad bewegbar sind.

Gemäß der Erfindung wird daher die seitenwandfrei aufgebaute Reifenkarkasse seitlich von Seitenwandtrommeln übernommen bzw. mit diesen verklemmt, sodass die erste Transfereinrichtung bereits wieder zur Karkassstation verfahren werden kann, damit die nächste Reifenkarkasse aufgebaut werden kann. Sobald die Seitenwände an der Reifenkarkasse angerollt sind, erfolgt die Übergabe der Reifenkarkasse an die zweite Transfereinrichtung, welche den Transfer zur Bombierstation durchführt. Mit der Erfindung kann daher eine Vielzahl von Reifenkarkassen sehr rationell sowie zeit- und kostensparend hergestellt werden.

Das erfindungsgemäße Verfahren soll vorteilhafterweise vollautomatisiert ablaufen können. Es ist daher vorgesehen, dass die von den Seitenwandtrommeln seitlich gehaltene Reifenkarkasse auf dem Transferpfad zu einem Seitenwandservicer verfahren wird, welcher die Seitenwände auf die Seitenwandtrommeln wickelt. Dabei können die Seitenwände während des Wickelvorganges seitlich an die Reifenkarkasse angerollt werden.

Im nächsten Verfahrensschritt werden die Seitenwandtrommeln mitsamt der mit den Seitenwänden versehenen Karkasse in den Transferpfad zurückgefahren, die zweite Transfereinrichtung wird über den Seitenwandtrommeln positioniert, nimmt die Reifenkarkasse auf und verfährt sie zur Bombierstation.

Das erfindungsgemäße Verfahren verwendet zwar zwei Transfereinrichtungen, insbesondere Karkasstrageringe, es lässt sich jedoch der maschinelle Aufwand gering halten, beispielsweise auch dadurch, dass die Transfereinrichtungen entlang eines linearen Transferpfades, welcher zwischen der Karkassstation und der Bombierstation verläuft, bewegt werden.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 bis Fig. 11 anhand vereinfachter und schematischer Darstellungen einzelne Schritte des erfindungsgemäßen Verfahrens und
Fig. 12 einen vereinfachten Teilquerschnitt eines PKW-Radialluftreifens.

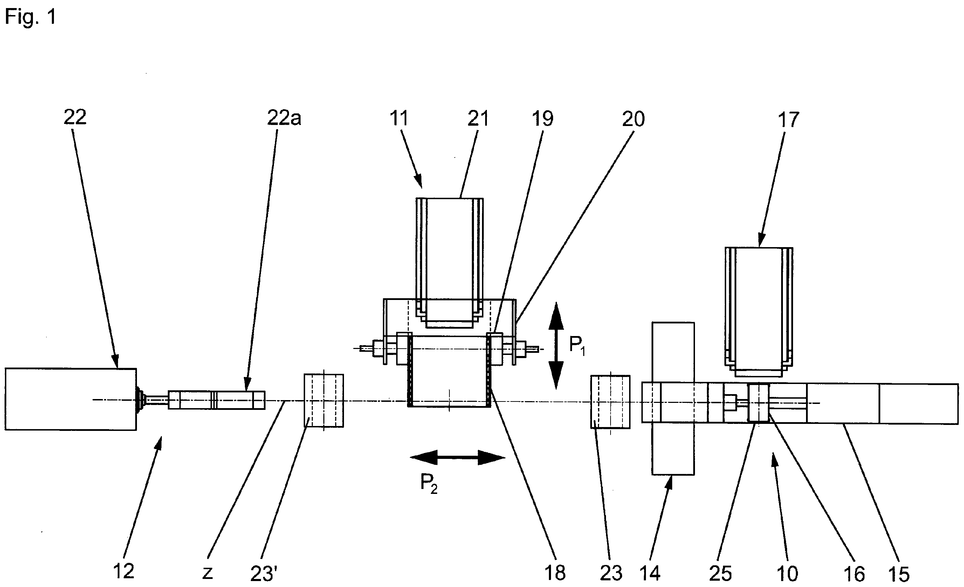

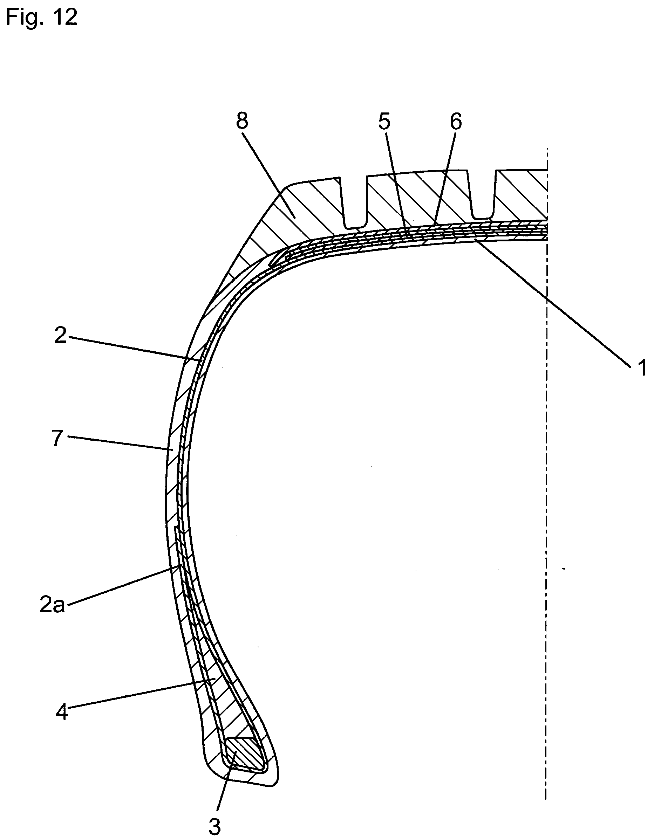

Das erfindungsgemäße Verfahren betrifft die Herstellung eines beliebigen Fahrzeugluftreifens in Radialbauart, insbesondere für Personenkraftwagen. In der Beschreibung des Aufbauverfahrens anhand der Figuren 1 bis 11 sind Reifenbauteile erwähnt, die in diesen Figuren großteils nicht dargestellt sind. Diese Bauteile und deren Positionierung im fertigen Fahrzeugluftreifen werden nun beispielhaft anhand der Fig. 12 erläutert. Der in Fig. 12 gezeigte Radialluftreifen weist eine luftdichte Innenschicht 1, eine Karkasseinlage 2, Wulstbereiche mit Wulstkernen 3 und Kernprofilen 4, einen Gürtel bestehend aus mehreren Gürtellagen 5 und einer Gürtelbandage 6, ferner Seitenwände 7 und einen Laufstreifen 8 auf. Die Karkasseinlage 2 besteht aus einer Lage oder aus mehreren Lagen von in bekannter Weise in eine Gummimischung eingebetteten, textilen oder metallischen Korden, die zumindest im Wesentlichen in radialer Richtung von Wulstbereich zu Wulstbereich verlaufen. Die Endabschnitte der Karkasseinlage 2 sind um die Wulstkerne 3 von axial innen nach axial außen geschlagen und bilden die entlang der Seitenwände 7 verlaufenden Hochschläge bzw. Lagenumschläge 2a. Die auf den Wulstkernen 3 befindlichen Kernprofile 4 sind Gummiprofile, wobei pro Wulstkern 3 mehr als ein Kernprofil 4 vorgesehen sein kann. Bei der Herstellung des Fahrzeugluftreifens aus den einzelnen Bestandteilen werden die Wulstkerne 3 meist gemeinsam mit den unvulkanisierten Kernprofilen 4 als Einheiten vorgefertigt. Diese Einheiten können außenseitig mit einer Lage oder mit mehreren Lagen von Wulstschutzstreifen und dergleichen versehen sein. Je nach Reifentyp können weitere, nicht gezeigte Bauteile, beispielsweise Gürtelpolster, im Reifen verbaut sein.

Die Erfindung befasst sich mit dem Aufbau der sogenannten Reifenkarkasse, welche bis auf den Laufstreifen 8 und den Gürtelverband die sonstigen Reifenbauteile umfasst, wobei gemäß dem in Fig. 12 gezeigten Beispiel zu diesen die Innenschicht 1, die Karkasseinlage 2, die Wulstkerne 3 mit Kernprofilen 4 und die Seitenwände 7 gehören. Zur Fertigstellung des Reifens wird die Reifenkarkasse mit dem Gürtelverband und dem Laufstreifen 8 in bekannter Weise verbunden. Die damit verbundenen Verfahrensschritte sind nicht Gegenstand der Erfindung und werden daher auch nicht beschrieben.

In der nachfolgenden Beschreibung beziehen sich Angaben wie "rechts", "links", "von links nach rechts", "von rechts nach links" auf die in den Figuren dargestellten Positionen, "nach vorne" bezeichnet eine Bewegungsrichtung Richtung Blattunterkante, "nach rückwärts" eine Bewegungsrichtung Richtung Blattoberkante.

Die Figuren 1 bis 12 zeigen Draufsichten auf Arbeitsstationen einer Anlage zum Aufbau der Reifenkarkasse eines Fahrzeugluftreifens. Wie beispielsweise Fig. 1 zeigt gehören zu diesen Arbeitsstationen, von rechts nach links betrachtet, eine Karkassstation 10, eine Seitenwandstation 11 und eine Bombierstation 12. Zwischen der Karkassstation 10 und der Seitenwandstation 11 sowie zwischen der Seitenwandstation 11 und der Bombierstation 12 ist jeweils eine Transfereinrichtung 23, 23' entlang eines von der Karkassstation 10 über die Seitenwandstation 11 bis zur Bombierstation 12 vorzugsweise gerade durchgehenden Transferpfades z bewegbar bzw. verfahrbar. Der Transferpfad z verläuft bei der gezeigten Ausführungsform entlang der zentralen Achse zwischen der Bombierstation 12 und der Karkassstation 10. Die Transfereinrichtungen 23, 23' können in an sich bekannter Weise aufgebaute Trageringe, insbesondere Karkasstrageringe sein, die in die unterschiedlichen Positionen, wie noch beschrieben wird, verfahren werden und die Karkasse von außen erfassen. Die Transfersysteme für die Transfereinrichtungen 23, 23' sind vorzugsweise oberhalb der Arbeitsstationen parallel zum Transferpfad z geführt.

Die Karkassstation 10 weist ein in Draufsicht etwa T-förmiges Grundgestell 14, eine Karkassmaschine 15 mit einer Karkass-Bautrommel 16 und einen Karkassservicer 17 auf. Die Seitenwandstation 11 weist einen Seitenwandservicer 21 und ein Grundgestell 18 auf, an welchem eine Halterung 20 nach vorne und nach rückwärts und daher in und aus dem Transferpfad z verfahrbar ist (Doppelpfeil P₁). An der Halterung 20 sind zwei Seitenwandtrommeln 19 derart angeordnet, dass sie aufeinander zu und voneinander weg bewegbar sind und somit parallel zum Transferpfad z verfahrbar sind (Doppelpfeil P₂). Die Bombierstation 12 weist eine Bombiermaschine 22 mit einer in an sich bekannter Weise ausgeführten Bombiertrommel 22a auf. Die Komponenten der einzelnen Arbeitsstationen, wie Karkassservicer, Karkassmaschine, Seitenwandservicer, Bombiermaschine und dergleichen können in an sich bekannter Weise ausgeführt sein.

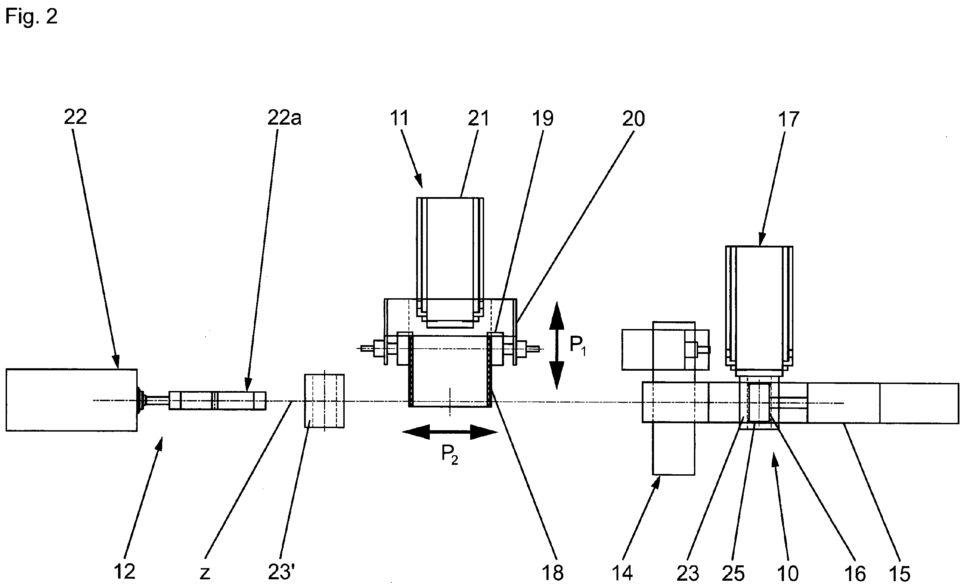

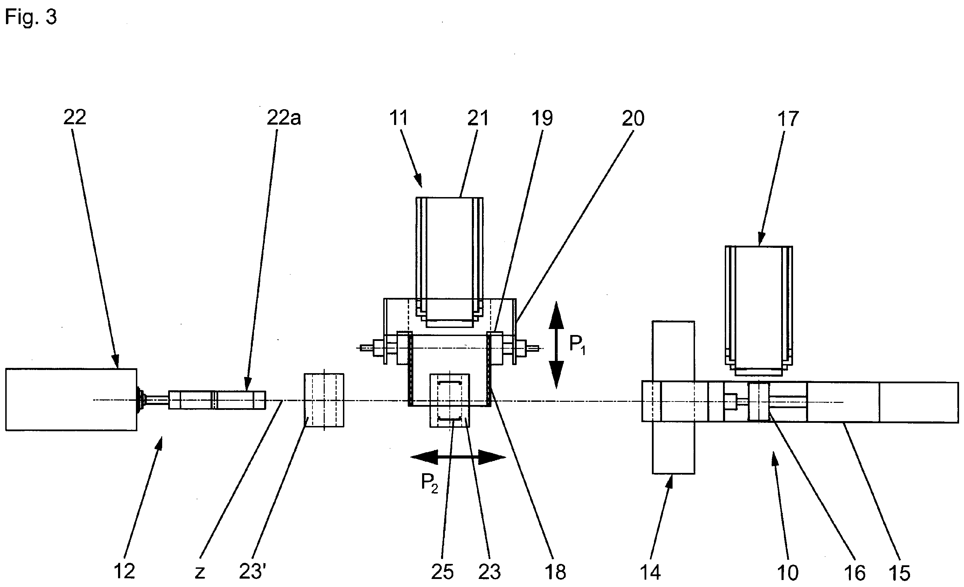

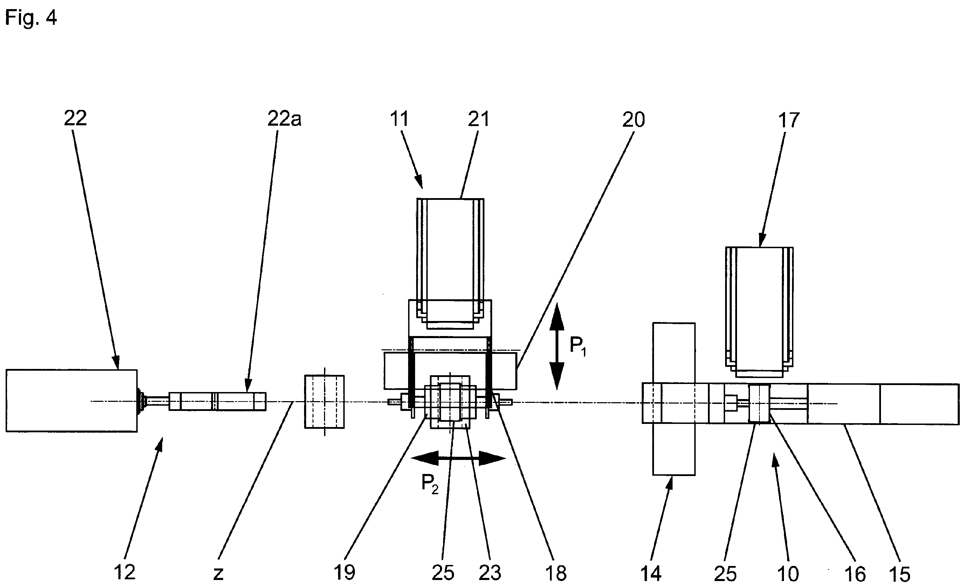

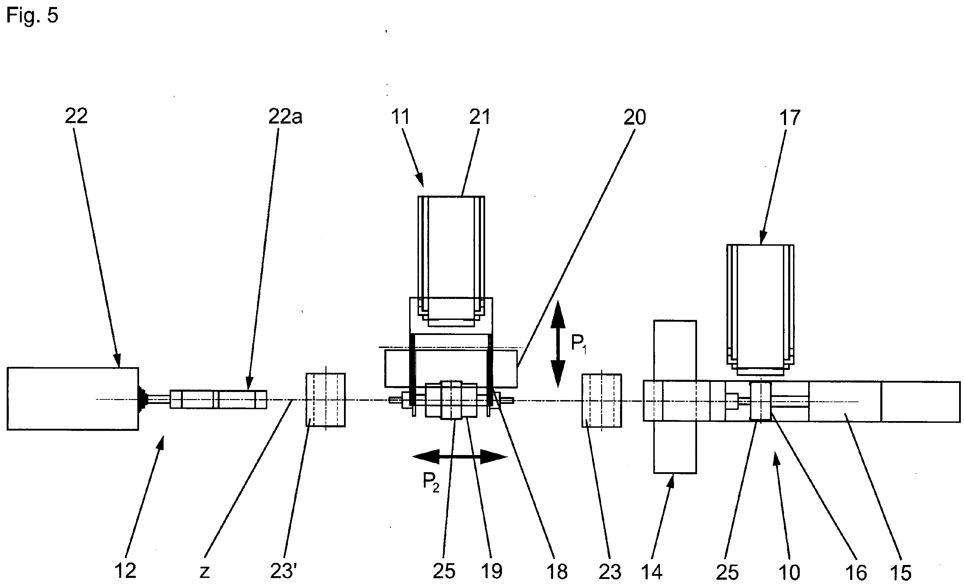

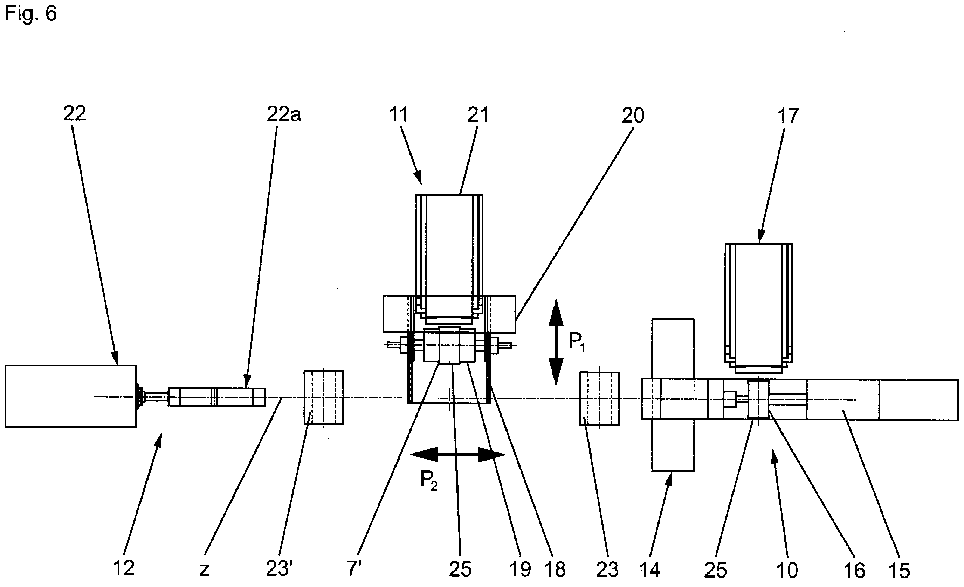

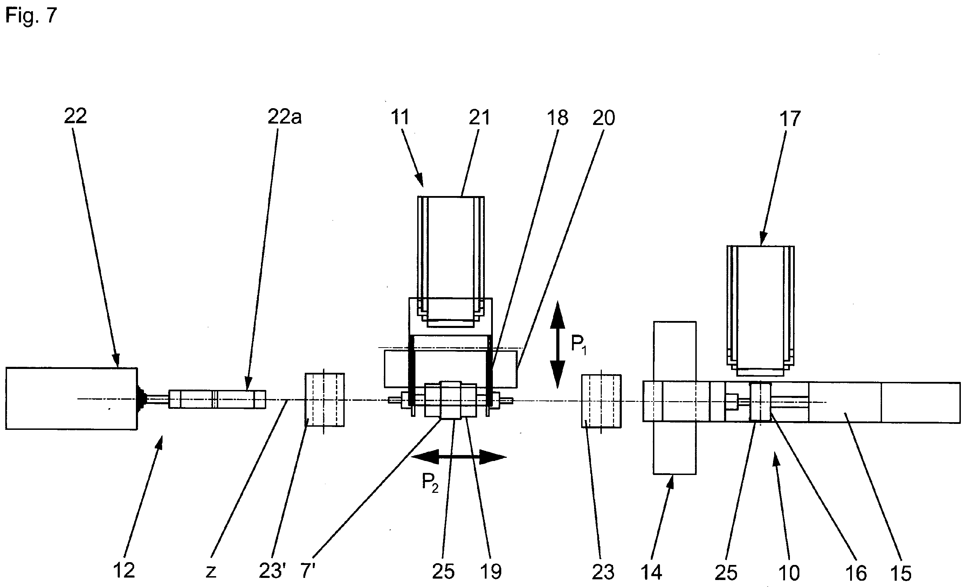

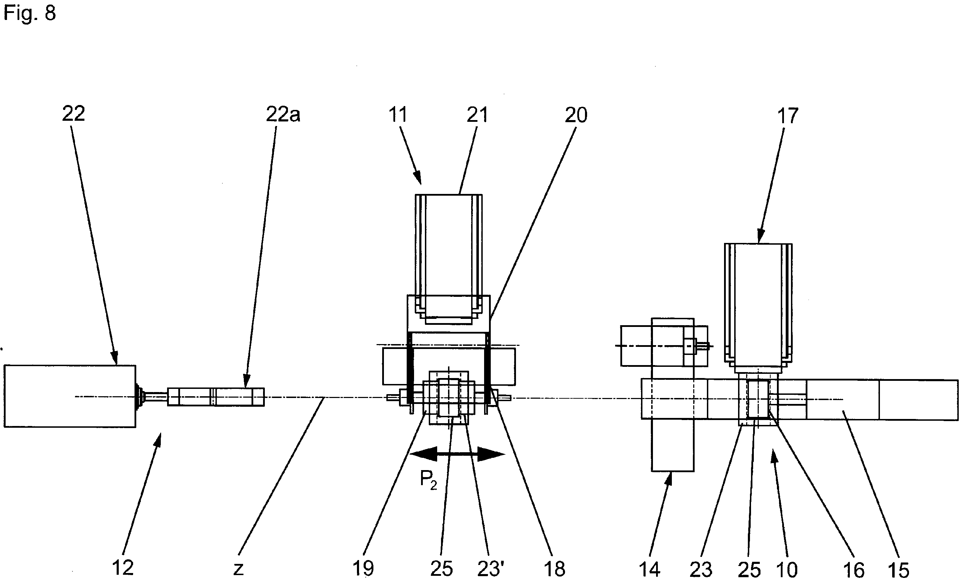

Anhand der Figuren 1 bis 11 wird nun die Herstellung der Reifenkarkasse des Fahrzeugluftreifens näher beschrieben. Im ersten Schritt gemäß Fig. 1 wird die Karkass-Bautrommel 16 vor dem Karkassservicer 17 positioniert. Hier werden vom Karkassservicer 17 sämtliche Komponenten der Reifenkarkasse 25 mit Ausnahme der beiden Seitenwände in an sich bekannter Weise auf die Bautrommel 16 aufgebracht bzw. gewickelt. Die beiden Karkasstrageringe 23 und 23' befinden sich in Wartepositionen, der Karkasstragering 23 vor der Karkassstation 10, der Karkasstragering 23' zwischen der Bombierstation 12 und der Seitenwandstation 11. Im nächsten, in Fig. 2 gezeigten Schritt, wird der Karkasstragering 23 über die aufgebaute Karkasse 25 verfahren und übernimmt die Karkasse 25 von der Karkass-Bautrommel 16. Nun wird der Karkasstragering 23 mitsamt der aufgenommenen Karkasse 25 vor die Seitenwandstation 11 gefahren. Auf der frei gewordenen Karkass-Bautrommel 16 kann gleich die nächste Reifenkarkasse aufgebaut werden. Fig. 3 zeigt den vor der Seitenwandstation 11 positionierten, die vorhin aufgebaute Reifenkarkasse 25 tragenden Karkasstragering 23. Die Halterung 20 mitsamt den beiden Seitenwandtrommeln 19 wird nach vorne verfahren, bis sich die beiden Seitenwandtrommeln 19 koaxial zum Karkasstragering 23 und damit zur Karkasse 25 befinden. Die beiden Seitenwandtrommeln 19 werden seitlich an die Karkasse 25 herangefahren und mit der Reifenkarkasse 25 seitlich verklemmt, sodass die Seitenwandtrommeln 19 die Reifenkarkasse 25 aufnehmen. Fig. 4 zeigt diese Position. Der Karkasstragering 23 wird von der Reifenkarkasse 25 gelöst und fährt seitlich Richtung Karkassstation 10 aus der Seitenwandstation 11 heraus in eine Warteposition vor der Karkassstation 10, wie es in Fig. 5 gezeigt ist. Die Halterung 20 mit den beiden Seitenwandtrommeln 19 und der von diesen gehaltenen Reifenkarkasse 25 wird nach rückwärts vor den Seitenwandservicer 21 verfahren. Vom Seitenwandservicer 21 werden die Materialstreifen für die Seitenwände 7' auf die Seitenwandtrommeln 19 gewickelt, wobei die Seitenwände 7' gleichzeitig seitlich an die Reifenkarkasse 25 angerollt bzw. angedrückt werden. Fig. 6 zeigt die Lage der Seitenwandtrommeln 19 und der Reifenkarkasse 25 beim/zum Auflegen der Seitenwände 7'. Im nächsten Schritt wird die Halterung 20 mitsamt den Seitenwandtrommeln 19 und der Karkasse 25 nach vorne in den Transferpfad z verfahren, wie es Fig. 7 zeigt. Jetzt erfolgt die Übergabe der Reifenkarkasse 25 mitsamt den bereits angerollten Seitenwänden 7' an den zweiten Karkasstragering 23'. Dieser wird seitlich über die Seitenwandtrommeln 19 verfahren und nimmt die Karkasse 25 mitsamt den angerollten Seitenwänden 7' auf. In Fig. 8 ist die Position zur Übergabe dargestellt. Mittlerweile ist die nächste Reifenkarkasse 25 an der Karkasstation 10 fertig gewickelt worden und wird beispielsweise zu diesem Zeitpunkt vom Karkasstragering 23 abgeholt. Fig. 8 zeigt den über diese Reifenkarkasse 25 bereits verfahrenen Karkasstragering 23.

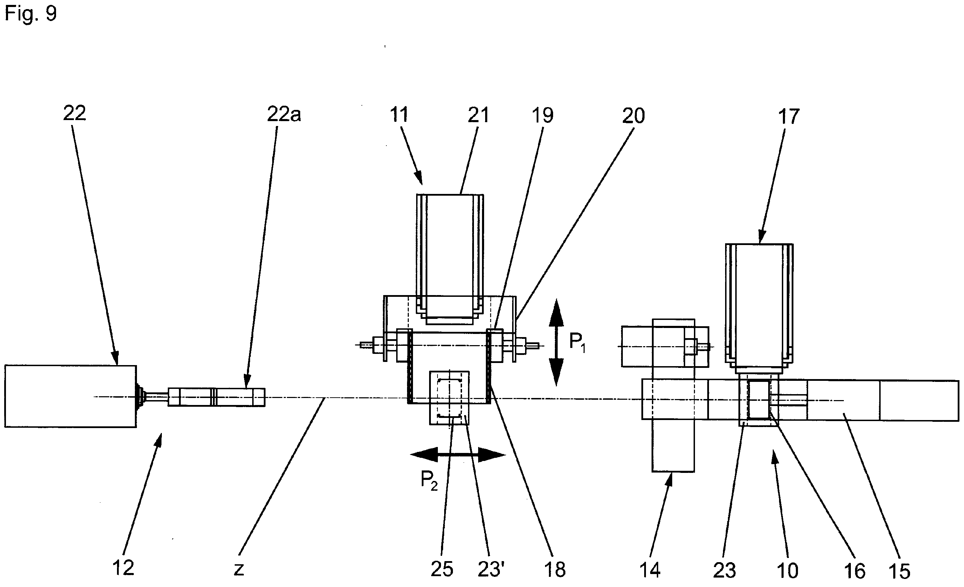

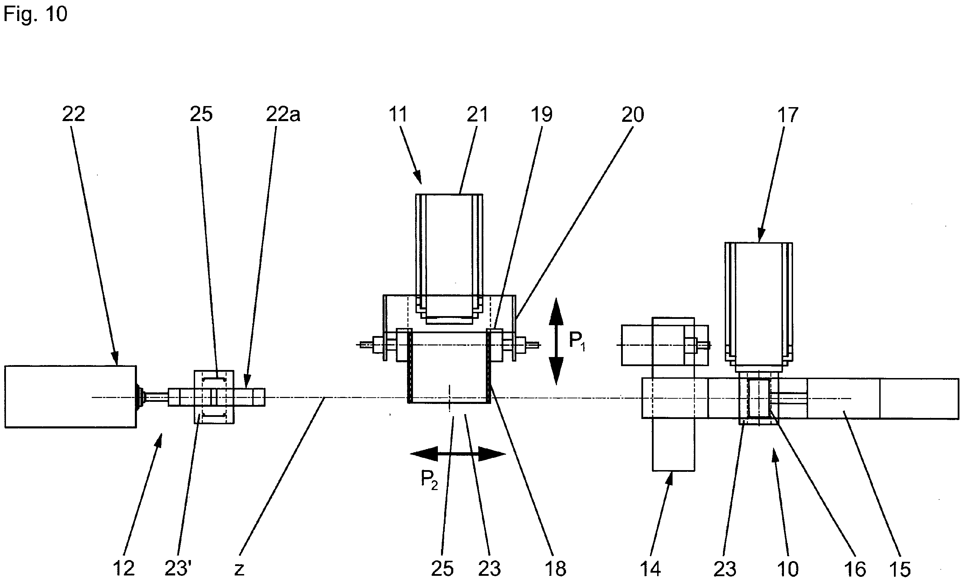

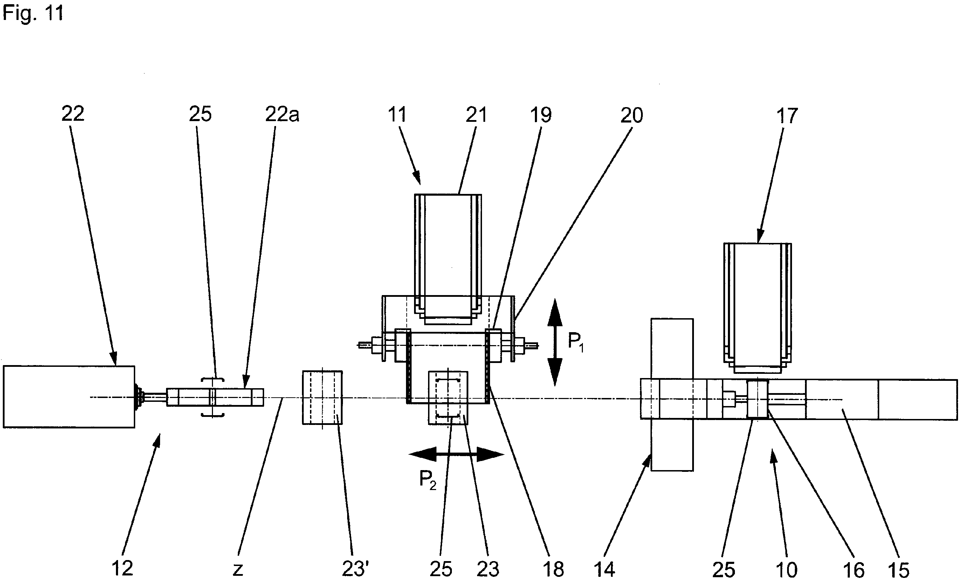

An der Seitenwandstation 11 werden die nicht mehr benötigten Seitenwandtrommeln 19 auseinandergefahren und mitsamt der Halterung 20 nach rückwärts verfahren, die rückwärts verfahrene Lage ist in Fig. 9 dargestellt. Der Karkasstragering 23' fährt die mit den Seitenwänden 7'komplettierte Karkasse 25 nach links zur Bombierstation 12. Hier wird die Karkasse 25 auf der Bombiertrommel 22a positioniert, den Übergabeschritt zeigt Fig. 10. Die Bombiermaschine 22 bombiert in bekannter Weise die Reifenkarkasse 25. Die torusförmige Karkasse kann mittels einer nicht gezeigten weiteren Transfereinrichtung entnommen und den noch erforderlichen Schritten zur Fertigstellung des Rohreifens zugeführt werden. Fig. 11 zeigt die auf der Bombiertrommel 22a positionierte Reifenkarkasse 25, der Karkasstragering 23' ist bereits wieder in seine Warteposition vor der Seitenwandstation 11 verfahren worden. Vor der Seitenwandstation 11 befindet sich mittlerweile bereits die hierher transportierte nächste Karkasse 25, welche vom Karkasstragering 23 gehalten wird. Die nächste Reifenkarkasse kann nun an der Karkassstation 10 aufgebaut werden.

### Bezugsziffernliste

- 1: Innenschicht
- 2: Karkasseinlage
- 2a: Lagenumschlag
- 3: Wulstkern
- 4: Kernprofil
- 5: Gürtellage
- 6: Gürtelbandage
- 7: Seitenwand
- 7': Seitenwand
- 8: Laufstreifen
- 10: Karkassstation
- 11: Seitenwandstation
- 12: Bombierstation
- 14: Grundgestell
- 15: Karkassmaschine
- 16: Karkass-Bautrommel
- 17: Karkassservicer
- 18: Grundgestell
- 19: Seitenwandtrommeln
- 20: Halterung
- 21: Seitenwandservicer
- 22: Bombiermaschine
- 22a: Bombiertrommel
- 23: Karkasstragering
- 25: Karkasse
- P₁: Doppelpfeil
- P₂: Doppelpfeil
- z: Transferpfad

## Patentansprüche

1. Verfahren zur Herstellung einer Karkasse für einen Fahrzeugluftreifen, welche mit einem Gürtelverband und einem Laufstreifen (8) zum fertigen Rohreifen komplettiert wird, wobei das Verfahren folgende Schritte aufweist:
- Aufbau einer seitenwandfreien Karkasse (25) mit einer Innenschicht (1), einer ein- oder mehrlagigen Karkasseinlage (2), Wulstkernen (3), insbesondere mit Kernprofilen (4), an einer Karkassstation (10) auf einer Karkass-Bautrommel (16) und unter Erstellung der Lagenumschläge,
- Aufbringen der Seitenwände (7') auf die Karkasse (25),
- Überführen der mit den Seitenwänden (7') versehenen Karkasse (25) zu einer Bombiermaschine (22) und Bombieren der Karkasse (25) in eine torusförmige Gestalt
**dadurch gekennzeichnet,**
**dass** die seitenwandfrei erstellte Karkasse (25) an eine erste
Transfereinrichtung (23) übergeben wird, welche die Karkasse (25) zu einer Seitenwandstation (11) verfährt, an welcher zwei Seitenwandtrommeln (19) seitlich an die Reifenkarkasse (25) herangefahren und mit dieser verklemmt werden, wobei anschließend die Transfereinrichtung von der Karkasse (25) gelöst und zur Karkassstation (10) rückgefahren wird, wobei die Seitenwände (7') auf die Seitenwandtrommeln (19) und seitlich an die Reifenkarkasse (25) angerollt werden, und wobei anschließend eine zweite Transfereinrichtung die Reifenkarkasse (25) von den Seitenwandtrommeln (19) übernimmt und zur Bombierstation (12) verfährt.

2. Verfahren nach Anspruch 1, **dadurch gekennzeichnet, dass** die von den Seitenwandtrommeln (19) seitlich gehaltene Reifenkarkasse (25) aus dem Transferpfad (z) zu einem Seitenwandservicer (21) verfahren wird, welcher die Seitenwände (7') auf die Seitenwandtrommeln (19) wickelt.

3. Verfahren nach Anspruch 1 oder 2, **dadurch gekennzeichnet, dass** die Seitenwände (7') während des Wickelvorganges seitlich an die Reifenkarkasse (25) angerollt werden.

4. Verfahren nach einem der Ansprüche 1 bis 3, **dadurch gekennzeichnet, dass** die Seitenwandtrommeln (19) mitsamt der mit den Seitenwänden (7') versehenen Karkasse (25) in den Transferpfad (z) zurückgefahren wird, wobei anschließend die zweite Transfereinrichtung (23') über den Seitenwandtrommeln (19) positioniert wird, die Reifenkarkasse (25) aufnimmt und zur Bombierstation (12) verfährt.

5. Verfahren nach einem der Ansprüche 1 bis 4, **dadurch gekennzeichnet, dass** die beiden Transfereinrichtungen (23, 23') entlang eines linearen Transferpfades (z), welcher zwischen der Karkassstation (10) und der Bombierstation (12) verläuft, bewegt werden.

6. Anlage zur Herstellung einer Karkasse (25) für einen Fahrzeugluftreifen, welche mit einem Gürtelverband und einem Laufstreifen (8) zum fertigen Rohreifen komplettiert wird, mit einer Karkassstation (10) mit einer Karkassmaschine (15) und einer Karkass-Bautrommel (16), einer Vorrichtung zum separaten Aufbringen der Seitenwände (7), einer Bombierstation (12) und zumindest einer entlang eines insbesondere linearen Transferpfades (z) verfahrbaren Transfereinrichtung (23) für die Karkasse
**dadurch gekennzeichnet,**
**dass** die Vorrichtung zum separaten Aufbringen der Seitenwände (7') eine zwischen der Karkassstation (10) und der Bombierstation (12) positionierte Seitenwandstation (11) mit einem Seitenwandservicer (21) und zwei Seitenwandtrommeln (19) ist, wobei letztere an einer Halterung (20) parallel zum Transferpfad (z) verfahrbar sind, wobei die Seitenwandtrommeln (19) mitsamt der Halterung (20) entlang eines Gestells in den und aus dem Transferpfad (z) bewegbar sind.

7. Anlage nach Anspruch 6, **dadurch gekennzeichnet, dass** zwei
Transfereinrichtung (23, 23') vorgesehen sind, wobei die erste Transfereinrichtung (23) die seitenwandfrei aufgebaute Karkasse (25) von der Karkassstation (10) zur Seitenwandstation (11) transportiert, und die zweite Transfereinrichtung (23') die mit den Seitenwänden (7') versehene Karkasse (25) von der Seitenwandstation (11) zur Bombierstation (12) transportiert.

## Claims

1. Method for producing a carcass for a pneumatic vehicle tyre that is completed by a breaker belt assembly and a tread rubber (8) to make up the finished green tyre, the method comprising the following steps:
- building up a sidewall-free carcass (25) with an inner layer (1), a single- or multi-ply carcass insert (2), bead cores (3), in particular with bead fillers (4), at a carcass station (10) on a carcass building drum (16) and creating the ply turnups,
- applying the sidewalls (7') to the carcass (25),
- transferring the carcass (25) provided with the sidewalls (7') to a shaping machine (22) and shaping the carcass (25) into a toroidal shape,
**characterized**
**in that** the carcass (25) created without sidewalls is transferred to a first transfer device (23), which moves the carcass (25) to a sidewall station (11), at which two sidewall drums (19) are moved up laterally to the tyre carcass (25) and are clamped to it, the transfer device subsequently being released from the carcass (25) and returned to the carcass station (10), the sidewalls (7') being rolled onto the sidewall drums (19) and laterally onto the tyre carcass (25), and a second transfer device subsequently taking over the tyre carcass (25) from the sidewall drums (19) and moving it to the shaping station (12).

2. Method according to Claim 1, **characterized in that** the tyre carcass (.25) held laterally by the sidewall drums (19) is moved out of the transfer path (z) to a sidewall servicer (21), which wraps the sidewalls (7') onto the sidewall drums (19).

3. Method according to Claim 1 or 2, **characterized in that** the sidewalls (7') are rolled laterally onto the tyre carcass (25) during the wrapping operation.

4. Method according to one of Claims 1 to 3, **characterized in that** the sidewall drums (19) together with the carcass (25) provided with the sidewalls (7') are returned into the transfer path (z), the second transfer device (23') subsequently being positioned over the sidewall drums (19), taking up the tyre carcass (25) and moving it to the shaping station (12).

5. Method according to one of Claims 1 to 4, **characterized in that** the two transfer devices (23, 23') are moved along a linear transfer path (z), which runs between the carcass station (10) and the shaping station (12).

6. System for producing a carcass (25) for a pneumatic vehicle tyre that is completed by a breaker belt assembly and a tread rubber (8) to make up the finished green tyre, comprising a carcass station (10) with a carcass machine (15) and a carcass building drum (16), a device for separately applying the sidewalls (7), a shaping station (12) and at least one transfer device (23) for the carcass, which can be moved along a transfer path (z), in particular a linear transfer path (z),
**characterized**
**in that** the device for separately applying the sidewalls (7') is a sidewall station (11) that is positioned between the carcass station (10) and the shaping station (12) and has a sidewall servicer (21) and two sidewall drums (19), the latter being movable on a mounting (20) parallel to the transfer path (z), the sidewall drums (19) together with the mounting (20) being movable into and out of the transfer path (z) along a framework.

7. System according to Claim 6, **characterized in that** two transfer devices (23, 23') are provided, the first transfer device (23) transporting the carcass (25) built up without sidewalls from the carcass station (10) to the sidewall station (11), and the second transfer device (23') transporting the carcass (25) provided with the sidewalls (7') from the sidewall station (11) to the shaping station (12).

## Revendications

1. Procédé de fabrication d'une carcasse de pneu de véhicule, qui est complétée par une nappe de ceinture et une bande de roulement (8) pour produire un pneu brut fini, le procédé présentant les étapes suivantes :
- construction d'une carcasse (25) sans paroi latérale, avec une couche intérieure (1), un insert de carcasse (2) mono- ou multicouche, des tringles (3), en particulier avec des profils de tringles (4), au niveau d'un poste de carcasse (10) sur un tambour de construction de carcasse (16) et en créant des retournements de plis,
- application des parois latérales (7') sur la carcasse (25),
- transfert de la carcasse (25) pourvue des parois latérales (7') à une machine de bombage (22) et bombage de la carcasse (25) à une forme de tore,
**caractérisé en ce que**
la carcasse (25) créée sans paroi latérale est transférée à un premier dispositif de transfert (23) qui déplace la carcasse (25) jusqu'à un poste de paroi latérale (11) au niveau duquel deux tambours de paroi latérale (19) sont avancés latéralement jusqu'à la carcasse de pneu (25) et sont serrés contre celle-ci, le dispositif de transfert étant ensuite séparé de la carcasse (25) et étant ramené au poste de carcasse (10), les parois latérales (7') étant roulées sur les tambours de paroi latérale (19)et latéralement sur la carcasse de pneu (25), et ensuite un deuxième dispositif de transfert recevant la carcasse de pneu (25) depuis les tambours de paroi latérale (19) et les déplaçant jusqu'au poste de bombage (12).

2. Procédé selon la revendication 1, **caractérisé en ce que** la carcasse de pneu (25) retenue latéralement par les tambours de paroi latérale (19) est déplacée depuis le chemin de transfert (z) jusqu'à un dispositif de distribution de paroi latérale (21) qui enroule les parois latérales (7') sur les tambours de paroi latérale (19).

3. Procédé selon la revendication 1 ou 2, **caractérisé en ce que** les parois latérales (7') sont roulées pendant l'opération d'enroulement latéralement sur la carcasse de pneu (25).

4. Procédé selon l'une quelconque des revendications 1 à 3, **caractérisé en ce que** les tambours de paroi latérale (19) conjointement avec la carcasse (25) pourvue des parois latérales (7') sont ramenés dans le chemin de transfert (z), le deuxième dispositif de transfert (23') étant ensuite positionné au-dessus des tambours de paroi latérale (19), recevant la carcasse de pneu (25) et la déplaçant jusqu'au poste de bombage (12).

5. Procédé selon l'une quelconque des revendications 1 à 4, **caractérisé en ce que** les deux dispositifs de transfert (23, 23') sont déplacés le long d'un chemin de transfert linéaire (z), qui s'étend entre le poste de carcasse (10) et le poste de bombage (12).

6. Installation de fabrication d'une carcasse (25) pour un pneu de véhicule, qui est complétée par une nappe de ceinture et une bande de roulement (8) pour produire un pneu brut fini, comprenant un poste de carcasse (10) avec une machine de carcasse (15) et un tambour de construction de carcasse (16), un dispositif pour l'application séparée des parois latérales (7), un poste de bombage (12) et au moins un dispositif de transfert (23) pour la carcasse, déplaçable le long d'un chemin de transfert (z) notamment linéaire,
**caractérisée en ce que**
le dispositif pour l'application séparée des parois latérales (7') est un poste de paroi latérale (11) positionné entre le poste de carcasse (10) et le poste de bombage (12) avec un dispositif de distribution de paroi latérale (21) et deux tambours de paroi latérale (19), ces derniers pouvant être déplacés parallèlement au chemin de transfert (z) à un dispositif de fixation (20), les tambours de paroi latérale (19) conjointement avec le dispositif de fixation (20) pouvant être déplacés le long d'un bâti dans le chemin de transfert (z) et hors de celui-ci.

7. Installation selon la revendication 6, **caractérisée en ce que** deux dispositifs de transfert (23, 23') sont prévus, le premier dispositif de transfert (23) transportant la carcasse (25) construite sans paroi latérale depuis le poste de carcasse (10) jusqu'au poste de paroi latérale (11), et le deuxième dispositif de transfert (23') transportant la carcasse (25) pourvue des parois latérales (7') depuis le poste de paroi latérale (11) jusqu'au poste de bombage (12).
